# EUROPEAN PATENT APPLICATION

(11) **EP 2 644 575 A1**
(43) Date of publication of application: **02.10.2013**
(21) Application number: 13160555.2
(22) Date of filing: 22.03.2013
(51) Int. Cl.: C02F 11/12, B30B 9/12

(54) **A dewatering device for sludge**

(30) Priority: 26.03.2012 IT MO20120079
(71) Applicant: R.E.M. S.R.L., 42025 Cavriago (Reggio Emilia) (IT)
(72) Inventor: Lirici, Matteo, 42025 Cavriago (Reggio Emilia) (IT)
(74) Representative: Paparo, Aldo

(57) **Abstract**

A dewatering device for sludge, comprising: a containment vessel (2), provided with an inlet opening (21) for the sludge, an outlet opening (22) for the dewatered sludge and at least one filtering portion (3), capable of separating a solid fraction from a liquid fraction of the sludge; a feed screw (4), arranged inside the vessel (2) and that is able to rotate about a principal axis (X) so as to advance a load of sludge along the principal axis (X); a back-pressure body (5) arranged downstream of the outlet opening (22) so as to prevent the advancement of the sludge; the feed screw (4) being slidable along the principal axis (X) with respect to the outlet opening (22) through the action of motor means (6).

## Description

The present invention relates to a device for dewatering sludge.

The invention relates in particular to dewatering devices comprising a transport feed screw located internally of a cylindrical filter. The feed screw is set in rotation internally of the cylindrical filter such as to advancingly transport a determined flow of sludge between an inlet section and an outlet section. A back-pressure body is positioned at or immediately downstream of the outlet section, which body obstructs advancing of the sludge, thus exerting a pressure which facilitates the expulsion of the liquid fraction from the mass of sludge. The liquid fraction progressively separates from the solid fraction, filtering through the surface of the cylindrical filter during the advancing of the sludge by means of the feed screw.

To obtain a good degree of dewatering, and good functioning of the devices of this type, the pressure exerted on the sludge by the back-pressure body is maintained constant at a predetermined value depending on the nature of the sludge and the degree of dewatering to be obtained. For this purpose, in devices at present available, elastic or elastically-mobile back-pressure bodies are used, in a parallel direction to the advancing of the sludge.

The solutions provided in the devices at present available are not entirely satisfactory in relation both to the maintaining of the pressure at a constant value, and especially in relation to the possibility of precisely selecting the pressure to be applied to the sludge with the aim of obtaining a desired degree of dewatering. If for example the type of sludge fed to the device changes, as regards both the type of material and the degree of moistness, it is often necessary to replace the back-pressure body. The mobile buffers are further subject to blockages caused by infiltrations of sludge between the mobile parts.

An aim of the present invention is to provide a dewatering device for sludge which enables obviating the drawbacks in the devices at present available.

An advantage of the device of the present invention is that it enables maintaining the pressure exerted on the sludge at a constant value.

A further advantage of the device of the present invention is that it enables precisely selecting the pressure to be applied on the sludge with the aim of obtaining a desired degree of dewatering.

Further characteristics and advantages of the present invention will more fully emerge from the detailed description of an embodiment of the present invention, illustrated by way of non-limiting example in the accompanying figures, in which:
- figure 1 illustrates the device according to the present invention in a schematic view in section, made along a longitudinal plane;
- figure 2 is the device of figure 1, where the feed screw (4) is displaced into a closer position to the outlet opening (22);
- figures 3 and 4 respectively illustrate the back-pressure element (5) in a position of normal functioning and in a closing position.

With reference to the above-cited figures, the dewatering device for sludge of the present invention comprises a containing vessel (2) provided with an inlet opening (21) for the sludge to be dewatered and an outlet opening (21) for the dewatered sludge. The vessel (2) further comprises at least a filtering portion (3) able to separate a solid fraction from a liquid fraction of the sludge to be dewatered. The filtering portion (3) is cylindrical and is provided with a plurality of radial through-openings which internally retain the solid fraction of the sludge, while they allow the liquid fraction to filter to the outside. The filtering portion is closed by a second vessel (10) which collects the liquid fraction of the sludge and is provided with one or more outlet openings (10a) for discharging the collected liquid fraction.

A feed screw (4) is arranged internally of the vessel (2). The feed screw (4) is predisposed to rotate about a principal axis (X) such as to advance, along the principal axis (X) from the inlet opening (21) towards the outlet opening (21), a flow of sludge to be dewatered. The rotation of the feed screw (4) can be achieved by means of a motor (M) and a transmission mechanism (T) widely available on the market. The feed screw (4) is preferably associated solidly in rotation with a rotating shaft (42).

The device further comprises a back-pressure body (5) arranged downstream of the outlet opening (22). The function of the back-pressure body (5) is to obstruct advancing of the sludge so as to generate a certain pressure in the mass of the sludge. This pressure facilitates the expulsion of the liquid fraction which filters through the filtering portion (3) externally of the vessel (2).

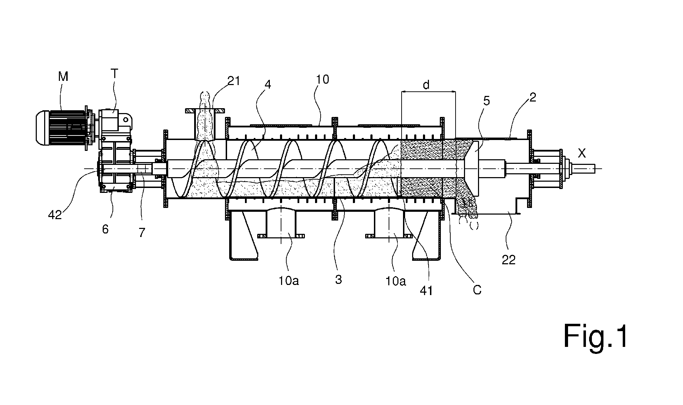

The action of the back-pressure element (5) determines the formation of a compacted mass (C) of dewatered sludge which extends approximately between a terminal section (41) of the feed screw (4), arranged upstream of the outlet opening (22) with respect to the advancing direction of the sludge, and the edge of the outlet opening (22). As illustrated in figure 1, the compacted mass (C) has a length (d) which approximately corresponds to the minimum distance between the terminal section (41) of the feed screw (4) and the edge of the opening (22). As it progressively faces the outlet opening (22), the pressure internally of the compacted mass (C) falls and the compacted mass (C) is broken up in contact with the back-pressure element (5) pushed by the feed screw (4), and exits from the vessel (2) through the outlet opening (22).

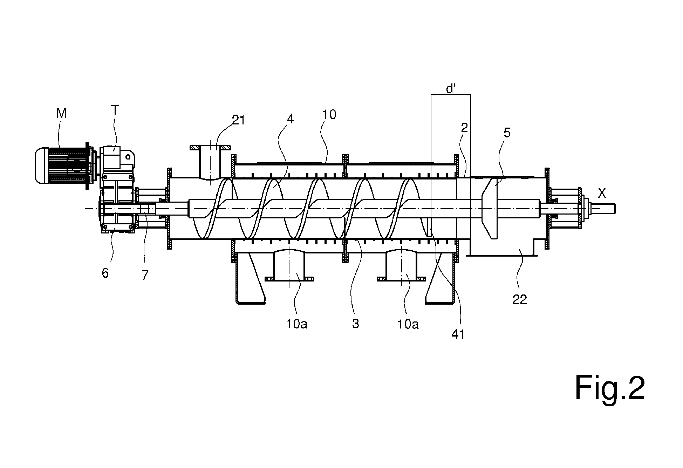

The feed screw (4) is advantageously slidable, with respect to the outlet opening (22), along the principal axis (X) by motor means (6). The feed screw (4) might be slidable with respect to the rotating shaft (42) or the rotating shaft (42) itself might be slidable along the principal axis (X) solidly with the feed screw (4). The sliding possibility of the feed screw (4) along the principal axis (X) enables varying the distance between the terminal section of the feed screw (4) and the outlet opening (22) and, consequently, varying the axial extension of the compacted mass (C). The axial extension of the compacted mass (C) has a determinant influence on the pressure which is transmitted to the sludge to be dewatered. The greater the axial extension of the compacted mass (C), the greater is the pressure which is transmitted to the sludge which advances along the vessel (2), the greater is the degree of dewatering that can be obtained and the greater the energy needed for the functioning of the device. Figure 1 shows the feed screw (4) in a position of greater distance from the outlet opening (22) and the compacted mass (C) of a greater length (d), while figure 2 shows the feed screw (4) in a position of lesser distance from the outlet opening (22) and the compacted mass (C) of a shorter length (d').

The possibility of varying the axial position of the feed screw (4) thus enables realizing a degree of control over the dewatering process that is absolutely unattainable with the devices at present available. In particular it is possible to choose a predetermined degree of dewatering of the sludge. In order to increase the degree of dewatering it is sufficient to increase the distance between the terminal section of the feed screw (4) and the outlet opening (22). As already mentioned, this leads to an increase in the length of the compacted mass (C) and a consequent increase in the pressure in the mass of the sludge to be dewatered. If the nature of the sludge to be processed changes, for example in relation to a greater or lesser initial moistness or a greater or lesser viscosity of the material, it is likewise possible to main a constant level of pressure in the material to be processed by adjusting the position of the feed screw (4).

The motor means (6) for the sliding of the feed screw (4) along the principal axis (X) are not illustrated in detail as they are widely available means known to the technical expert in the sector. They can comprise, for example, an oil-dynamic or electric linear actuator, or an actuator of another type able to determine a sliding of the feed screw (4) along the principal axis (X). The motor means (6) can determine a sliding of the feed screw (4) with respect to the rotating shaft (42) or might determine a sliding solidly with the rotating shaft (42) and the feed screw (4) which, in this case, is solidly constrained to the rotating shaft (42) also with respect to the sliding along the principal axis (X).

In a preferred embodiment, the device comprises a load detector (7) predisposed to detect the axial load transmitted to the feed screw (4). The detector (7) can be constituted for example by a load cell. A control module, not illustrated, is connected to the load detector (7) and to the motor means (6). The control module is predisposed to receive in input, from the load detector (7), a signal indicating the axial load transmitted to the feed screw (4) and to activate the motor means (6) according to the signal received, with the aim of regulating the axial position of the feed screw (4) as a function of the load transmitted by the sludge to the feed screw (4). The control module preferably enables setting a range of values within which the load on the feed screw is maintained. The setting of this range might also be done by setting a reference value for the load transmitted to the feed screw (4) with a predetermined higher displacement and a lower displacement. In this case the control module performs a comparison between the value transmitted by the detector (7) and the endpoints of the range of the values set by the user. If the value transmitted by the detector (7) is lower than the lower end of the set range, the control module activates the motor means (6) in order to displace the feed screw (4) distancingly from the outlet opening (22). Differently, if the value transmitted by the detector (7) is above the upper endpoint of the set range, the control module activates the motor means (6) such as to displace the feed screw (4) nearingly to the outlet opening (22).

As the load transmitted to the feed screw (4) is connected directly to the pressure produced internally of the mass of sludge being processed, which pressure is in turn linked to the degree of dewatering obtainable, by means of the control exerted by the control module and the motor means (6) it is possible to automatically adjust the degree of dewatering of the sludge, and with great precision.

By predisposing a specific calculating algorithm which connects the load transmitted to the feed screw (4), the pressure acting on the mass of sludge transiting along the device and the degree of dewatering of the sludge, it would be possible to directly set the desired degree of dewatering on the control module.

It would also be possible to carry out an automatic regulating of the position of the feed screw (4) in relation to the power absorbed by the device during functioning. This is because the load transmitted to the feed screw (4) is directly connected to the power required for activating the feed screw (4) in rotation. The greater the distance of the terminal section of the feed screw (4) from the outlet opening (22), the greater is the length of the compacted mass (C), the greater is the load transmitted by the sludge to the feed screw (4) the greater is the power required for the rotation of the feed screw given a same rotation velocity. Thus by setting a desired threshold of power absorbed by the device, the control module can consequently regulate the position of the feed screw (4).

In a first embodiment of the device, shown in figures 1 and 2, the feed screw (4) is slidable along the principal axis (X) with respect to the back-pressure body (5). In this first embodiment, the back-pressure body (5) is fixed with respect to sliding and rotation along the principal axis (X). In this first embodiment, the back-pressure body (5) acts as a rotation brake with respect to the compacted mass (C), preventing it from rotating solidly with the feed screw (4).

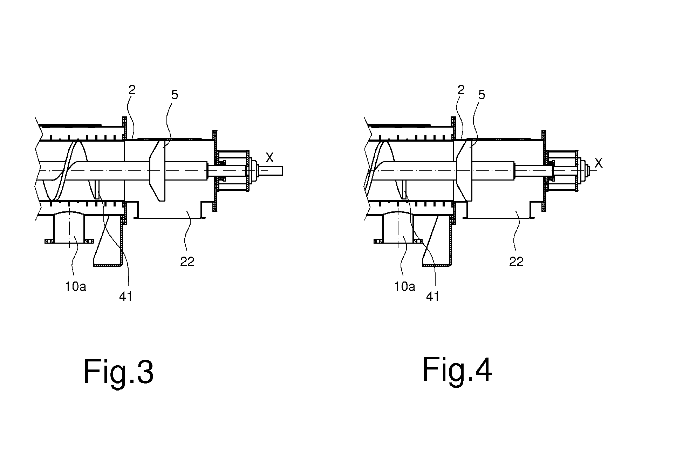

In a second embodiment of the device, schematically illustrated in figures 3 and 4 limitedly to the zone of the outlet opening (22), the back-pressure body (5) is solidly constrained to the feed screw (4) with respect to sliding along the principal axis (X). This enables using the back-pressure body (5) as a cover for the closing of the vessel (2) and the outlet opening (22). In particular, the back-pressure body (5) can be conformed such as to sealingly slide on the internal surface of the vessel (2) such as to take on, apart from a normal functioning position illustrated in figure 3, also a closing position, shown in figure 4, in which it realizes a seal against the flow of the sludge upstream of the outlet opening (22). This seal can also be obtained via a partial contact between the back-pressure body and the edge of the outlet opening (22). With reference to the illustrated embodiments, in which the outlet opening (22) is orientated perpendicularly to the principal axis (X), the back-pressure body (5) can be shaped in such a way as to project internally of the outlet opening (22) and to be positioned at least partially in contact with the edge of the outlet opening (22) in the closing position.

The possibility of arranging the back-pressure body (5) in the closing position is particularly advantageous during the start-up steps of the device. By arranging the back-pressure body (5) in the closing position it is indeed possible to prevent the discharging of the sludge up to when the compacted mass (C) has been formed. In this way the discharge of the sludge when it has not yet been sufficiently dewatered can be prevented.

A further advantage, connected to the possibility of arranging the back-pressure body (5) in the closing position, is that the back-pressure body (5) can be used as a safety cover in a case of malfunctioning of the device and/or a drop in pressure internally of the vessel (2), with the aim of preventing discharging of the liquid via the outlet opening (22).

## Claims

1. A dewatering device for sludge, comprising:
A containment vessel (2), provided with an inlet opening (21) for the sludge, an outlet opening (22) for the dewatered sludge and at least one filtering portion (3), capable of separating a solid fraction from a liquid fraction of the sludge;
a feed screw (4), arranged inside the vessel (2) and that is able to rotate about a principal axis (X) so as to advance a load of sludge along the principal axis (X);
a back-pressure body (5) arranged downstream of the outlet opening (22) so as to prevent the advancement of the sludge;
**characterised in that** the feed screw (4) is slidable along the principal axis (X) with respect to the outlet opening (22) through the action of motor means (6).

2. The device according to claim 1, comprising: a load detector (7) predisposed to detect the axial load transmitted to the feed screw (4); a control module, connected to the load detector (7) and to the motor means (6), and predisposed to receive from the load detector (7) an incoming signal indicative of the axial load transmitted to the feed screw (4) and to activate the motor means (6) in accordance with the signal received.

3. The device according to claim 2, wherein the load detector (7) is a load cell.

4. The device according to claim 2, wherein: the control module is predisposed to enable setting of a range of values within which the load on the feed screw (4) is to be maintained, as well as to carry out a comparison between the value transmitted from the detector (7) and the endpoints of the set range of values; if the value transmitted by the detector (7) is lower than the lower endpoint of the set range, the control module activates the motor means (6) so as to move the feed screw (4) away from the outlet opening (22); if the value transmitted by the detector (7) is higher than the higher endpoint of the set range, the control module activates the motor means (6) so as to move the feed screw (4) towards the outlet opening (22).

5. The device according to claim 4, wherein the control module is provided with a calculation algorithm that correlates the load transmitted to the feed screw (4), the pressure acting on the mass of sludge and the degree of dewatering of the sludge, the control module being predisposed to permit setting of the degree of dewatering for the sludge.

6. The device according to claim 4, wherein the control module is provided with a calculation algorithm that correlates the load transmitted to the feed screw (4) with the power absorbed by the device, the control module being predisposed to permit setting of the power absorbed by the device.

7. The device according to claim 1, wherein the feed screw (4) is slidable along the principal axis (X) with respect to the back-pressure body (5).

8. The device according to claim 1, wherein the back-pressure body (5) is solidly constrained to the feed screw (4) with respect to the sliding thereof along the principal axis (X).
